# EUROPÄISCHE PATENTSCHRIFT

(11) **EP 1 661 634 B1**
(45) Veröffentlichungstag und Bekanntmachung des Hinweises auf die Patenterteilung: **31.08.2011**
(21) Anmeldenummer: 05090324.4
(22) Anmeldetag: 24.11.2005
(51) Int. Cl.: B08B 15/02, B08B 5/02, B65G 45/22

(54) **Vorrichtung zum kontaktlosen Reinigen eines Förderelementes und Anordnung zum Transportieren und/oder Speichern stabförmiger Artikel mit einer Vorrichtung zum kontaktlosen Reinigen eines Förderelementes**
Apparatus for contactless cleaning a conveyor and assembly for transporting and/or storing elongate articles comprising an apparatus for contactless cleaning a conveyor
Appareil pour le nettoyage sans contact d'un convoyeur et ensemble pour transporter et/ou stocker des articles en forme de baguette comprenant un appareil pour le nettoyage sans contact d'un convoyeur

(30) Priorität: 24.11.2004 DE 102004057445
(43) Veröffentlichungstag der Anmeldung: 31.05.2006
(73) Patentinhaber: Hauni Maschinenbau AG, 21033 Hamburg (DE)
(72) Erfinder: Schmidt, Hans-Herbert, 22177 Hamburg (DE); Tracht, Knut, 56566 Neuwied (DE)
(74) Vertreter: Wenzel & Kalkoff

(56) Entgegenhaltungen:
- EP-A- 1 445 218
- WO-A-97/06082
- DE-A1- 3 612 490
- DE-U1- 29 719 651
- US-A- 5 372 242

## Beschreibung

### Beschreibung

Die Erfindung betrifft eine Vorrichtung zum kontaktlosen Reinigen eines Förderelementes, das zur Aufnahme stabförmiger Artikel der Tabak verarbeitenden Industrie ausgebildet ist, umfassend mindestens ein Ionisierungselement zur Beseitigung elektrostatischer Ladungen auf den zu reinigenden Oberflächen des Förderelementes, mindestens eine rotierende Druckluftdüse zum Lösen und Abtragen von auf Oberflächen des Förderelementes befindlichen Verschmutzungen sowie eine Saugeinrichtung zum Absaugen der verschmutzen Abluft. Des weiteren betrifft die Erfindung eine Anordnung zum Transportieren und/oder Speichern stabförmiger Artikel der Tabak verarbeitenden Industrie, umfassend ein endlos umlaufendes Förderelement, das einen mit Artikeln versehenen Volltrum und einen Leertrum ohne Artikel aufweist, ein Führungselement, das unterhalb des Förderelementes zum Führen und/oder Stützes desselben angeordnet ist, sowie eine Vorrichtung zum Reinigen des Förderelementes, wobei die Vorrichtung zum Reinigen im Bereich des Leertrums angeordnet ist.

Derartige Vorrichtungen und Anordnungen kommen in der Tabak verarbeitenden Industrie zu vielfältigen Zwecken zum Einsatz. Bei der Herstellung von Zigaretten oder dergleichen, werden Tabakstöcke, Filterstäbe, Zigaretten oder dergleichen transportiert, gespeichert, übergeben oder anderweitig gefördert. Hierzu dienen Förderelemente, die als Ketten, Bänder oder in anderer üblicher Weise ausgebildet sein können. Typische Speicheranordnungen vom Typ ORBIS und VARIOS sind in den europäischen Schriften EP 0 581 143 B1 bzw. EP 1 445 218 A1 der Anmelderin ausführlich beschrieben.

Die Förderelemente sind mindestens partiell durch ein Führungselement, das unterhalb des Förderelementes angeordnet ist, gestützt und/oder geführt. Beim Transport, bei der Speicherung oder der Übergabe stabförmiger Artikel wird das Förderelement durch Abrieb des Förderelementes selbst, Reste der auf dem Förderelement befindlichen Artikel, Staub aus der Umgebung und insbesondere auch Charcoal-Granulat verschmutzt. Gerade die Entfernung des Charcoal-Granulats bei einem Markenwechsel, aber auch die Aufrechterhaltung der Beweglichkeit des Förderelementes machen eine Reinigung des Förderelementes erforderlich. Es ist daher bekannt, Vorrichtungen zum Reinigen der Förderelemente vorzusehen. Als besonders effektiv haben sich dabei kontaktlose Reinigungsvorrichtungen, beispielsweise elektrostatische Reinigungsvorrichtungen mit den eingangs genannten Merkmalen erwiesen. Diese sind im Bereich eines Leertrums des Förderelementes angeordnet.

Die bekannten Vorrichtungen zum Reinigen des Förderelementes weisen jedoch den Nachteil auf, dass sie offen gestaltet sind. Das bedeutet, dass insbesondere rotierende Druckluftdüsen und die Saugeinrichtung direkten Einfluss auf die Umgebung haben. Mit anderen Worten blasen die Druckluftdüsen die vom Förderelement gelösten Schmutzpartikel in die Umgebung. Dies kann zum einen zum Beispiel dazu führen, dass Artikel, die sich auf dem Volltrum befinden, von diesem herunter geblasen werden. Zum anderen werden die umliegenden Artikel aber auch das Förderelement selbst wiederum mit der verschmutzen Luft beaufschlagt. Der Reinigungsvorgang ist anders ausgedrückt unkontrolliert, da z.B. auch Schmutzpartikel auf unterhalb des Leertrums befindliche Elemente, wie z.B. den Volltrum oder andere Bauteile dieser oder anderer Vorrichtungen fallen können.

Es ist daher Aufgabe der vorliegenden Erfindung, eine Vorrichtung zum Reinigen eines Förderelementes zu schaffen, dass eine zuverlässige und sichere Reinigung ermöglicht. Des Weiteren ist es Aufgabe der Erfindung, eine Anordnung zum Transportieren und/oder Speichern stabförmiger Artikel vorzuschlagen, die eine sichere und zuverlässige Reinigung des Förderelementes sicherstellt.

Diese Aufgabe wird durch eine Vorrichtung mit den eingangs genannten Merkmalen dadurch gelöst, dass der Vorrichtung ein Gehäuse zur Bildung einer gegenüber der

Umgebung mindestens teilweise abgeschirmten Reinigungskammer zugeordnet ist, wobei die Reinigungskammer eine Eingangsöffnung und eine Ausgangsöffnung für das zu reinigende Förderelement aufweist, derart, dass Oberseite und Unterseite des Förderelementes umschlossen sind, dass das Ionisierungselement mindestens zwei Ionisierungsstäbe aufweist, wobei die Ionisierungsstäbe mit ihrer Längserstreckung parallel zum Förderelement in dessen Bewegungsrichtung ausgerichtet sind, und dass die Vorrichtung mindestens zwei Einheiten mit jeweils zwei Druckluftdüsen aufweist, die rotierend ausgebildet sind, wobei die beiden Einheiten mit den jeweils zwei Druckuftdüsen in Bewegungsrichtung T des Förderelementes hintereinander und zwischen den Ionisierungsstäben angeordnet sind. Mit dieser Vorrichtung wird der eigentliche Reinigungsvorgang abgeschirmt von der Umgebung durchgeführt. Die Abkapselung der Reinigungsvorrichtung durch das Gehäuse ermöglicht auf einfache und effektive Weise einen Schutz der Umgebung vor der durch die Druckluftdüsen und die Saugeinrichtung aufgewirbelten und verschmutzten Abluft. Des Weiteren stellt das Gehäuse sicher, dass durch den Reinigungsvorgang gelöste und herab fallende Schmutzpartikel aufgefangen und zwangsgeführt und vor allem kontrolliert abgeleitet werden. Durch die erfindungsgemäße Ausbildung und Anordnung des Ionisierungselementes wird auf engem Bauraum eine maximal lange Reinigungsstrecke erreicht. Das Vorsehen von zwei Einheiten mit jeweils zwei Druckluftdüsen und deren Anordnung optimiert den Reinigungsprozess weiter.

Vorteilhafterweise sind im Bereich der Eingangsöffnung und der Ausgangsöffnung der Reinigungskammer Dichtmittel angeordnet, die in einer besonders bevorzugten Weiterbildung zur vollständigen Abdichtung der Reinigungskammer an die Kontur des durch die Reinigungskammer hindurch bewegbaren Förderelementes angepasst sind. Dadurch wird ein quasi geschlossenes System erreicht, in dem die Zuluft, die als Druckluft mittels der Druckluftdüsen in die Reinigungskammer geleitet wird, und die Abluft in geschlossenen Kreisen zirkulieren. Mit dieser Maßnahme wird die Umgebung in besonders effektiver Weise gegenüber gelösten und aufgewirbelten Schmutzpartikeln geschützt.

Des Weiteren wird die Aufgabe durch eine Anordnung mit den eingangs genannten Merkmalen dadurch gelöst, dass die Vorrichtung zum Reinigen nach einem der

Ansprüche 1 bis 8 ausgebildet ist. Die dadurch erreichten Vorzüge wurden bereits weiter oben beschrieben, so dass zur Vermeidung von Wiederholungen darauf verwiesen wird.

Vorzugsweise ist das Führungselement im Bereich der Reinigungskammer mindestens teilweise unterbrochen. Dadurch wird ein zusätzlicher Reinigungseffekt erzielt, indem zusätzliche Verwirbelungen erzeugt werden können, derart, dass das Förderelement auch von unten mit der reinigenden Druckluft beaufschlagbar ist.

Weitere bevorzugte und vorteilhafte Merkmale und Weiterbildungen ergeben sich aus den Unteransprüchen und der Beschreibung. Besonders bevorzugte Ausführungsformen der Erfindung werden anhand der beigefügten Zeichnung näher erläutert. In der Zeichnung zeigt:
Fig. 1 eine perspektivische Ansicht einer schematischen Darstellung der Vorrichtung zum Reinigen mit einer durch die Reinigungskammer laufenden Förderkette,
Fig. 2 eine vergrößerte Darstellung der Vorrichtung gemäß Figur 1 ohne Gehäusedeckel,
Fig. 3 eine Vorderansicht der Vorrichtung,
Fig. 4 eine Schnittansicht entlang Schnitt B-B gemäß Figur 3,
Fig. 5 eine Seitenansicht der Vorrichtung,
Fig. 6 eine vergrößerte Darstellung des Einlaufbereiches der Förderkette in den Reinigungsraum,
Fig. 7 die Vorderansicht gemäß Figur 3 ohne Vorderwand, und
Fig. 8a+b verschiedene Positionierungen der Vorrichtung gemäß Figur 1 am Beispiel einer Speicheranordnung.

Die gezeigte Vorrichtung, vorzugsweise als Bestandteil einer nur angedeuteten Anordnung zum Transportieren und/oder Speichern stabförmiger Artikel, dient zum kontaktlosen Reinigen von Förderketten.

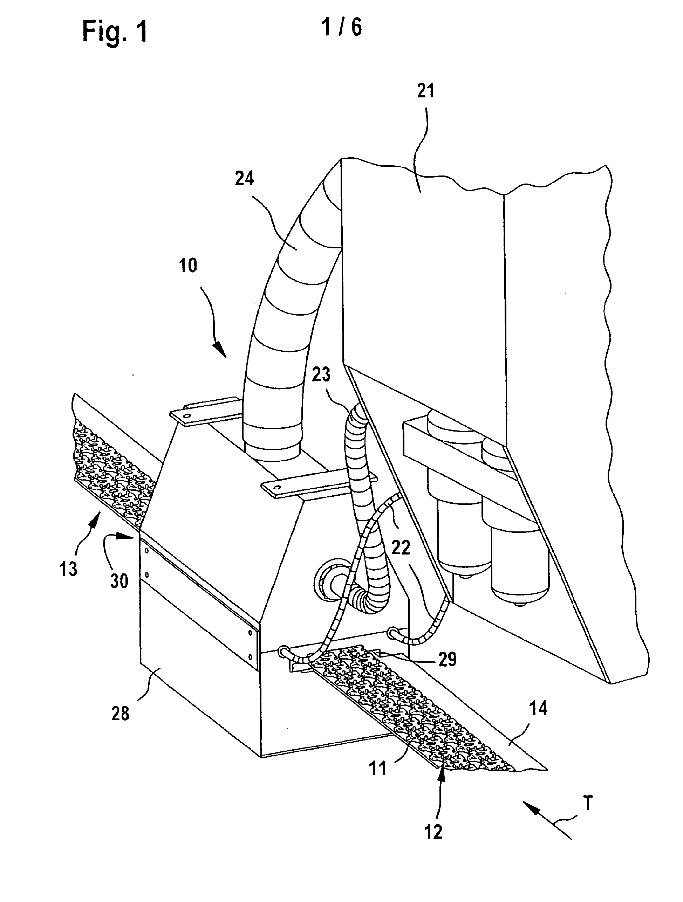

In der Figur 1 ist eine Vorrichtung 10 zum kontaktlosen Reinigen eines als Förderkette 11 ausgebildeten Förderelementes 12 gezeigt. Die Vorrichtung 10 ist üblicherweise Bestandteil einer Anordnung, die in der beschriebenen Ausführung zum Transportieren und/oder Speichern stabförmiger Artikel der Tabak verarbeitenden Industrie, wie z.B. Filterzigaretten, ausgebildet ist. Hierzu weist die Anordnung die endlos umlaufende Förderkette 11 auf, die einen Volltrum und einen Leertrum umfaßt. Der Volltrum ist der mit Artikeln versehene Abschnitt der Förderkette 11. Der Leertrum, in der Figur 1 mit der Bezugsziffer 13 versehen, ist der Abschnitt der Förderkette 11, der frei von Artikeln ist. Die Förderkette 11 ist bevorzugt aus Kunststoff hergestellt. Andere übliche Werkstoffe sind jedoch ebenfalls verwendbar. Des Weiteren umfasst die Anordnung ein Führungselement 14, das unterhalb der Förderkette 11 angeordnet ist und zur Führung und/oder zum Stützen der Förderkette 11 dient. Das Führungselement 14 ist bevorzugt ebenfalls aus Kunststoff hergestellt. Es kann auch aus Metall oder Verbundwerkstoffen gebildet sein. Im letzteren Fall ist ein beispielsweise aus Metall bestehendes Führungselement 14 mit einer Kunststoffoberfläche versehen.

Die Vorrichtung 10 umfasst ein Ionisierungselement 15, das in der gezeigten Ausführungsform zwei Ionisierungsstäbe 16, 17 aufweist. Die Ionisierungsstäbe 16, 17 sind mit ihrer Längserstreckung parallel zur Förderkette 11 in deren Bewegungs- bzw. Transportrichtung T ausgerichtet. Die Ionisierungsstäbe 16, 17 sind beabstandet zur Förderkette 11 oberhalb und leicht seitlich versetzt zu letzterer angeordnet. Sie weisen über ihre gesamte Länge in Längsrichtung sogenannte Ionisierungsspitzen 31, 32 auf. Diese Ionisierungsspitzen 31, 32 sind radial und schräg zur Förderkette 11 ausgerichtet. Das bedeutet, dass die Spitzen 31, 32 der Ionisierungsstäbe 16, 17 in einem Winkel auf die Förderkette 11 gerichtet sind, derart, dass die gesamte Breite der Förderkette 1 1 durch die einander gegenüberliegenden Ionisierungsstäbe 16, 17 ionisierbar ist. Der Abstand zwischen den Ionisierungsstäben 16, 17 und der Förderkette 11 ist variabel und hängt von verschiedenen anderen Parametern ab. Ohne die Unterstützung der Druckluft aus den Druckluftdüsen 18 beträgt der Abstand z.B. max. 100mm. Mit Unterstützung der Druckluft aus den Druckluftdüsen 18 kann der Abstand auch bis zu 500mm betragen. Andere Abstände sind jedoch ebenfalls möglich.

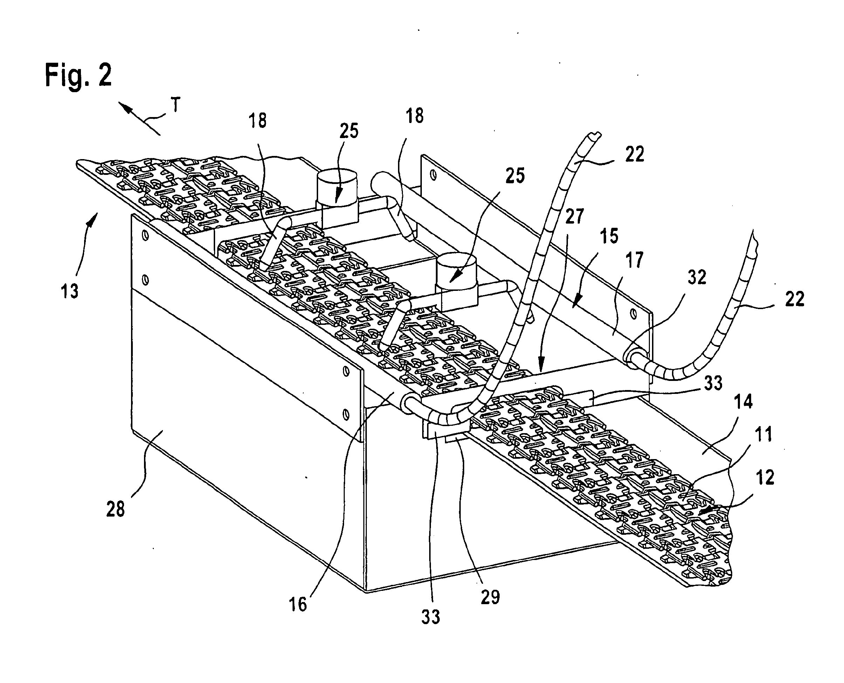

Weiterhin sind mindestens eine rotierende Druckluftdüse 18 und eine Saugeinrichtung 19 Bestandteil der Vorrichtung 10. Bevorzugt und in der Figur 2 gezeigt, weist die Vorrichtung 10 jedoch mindestens zwei Einheiten 25 mit jeweils zwei Druckluftdüsen 18 auf, die rotierend ausgebildet sind. Die beiden Einheiten 25 mit den jeweils zwei Druckluftdüsen 18 sind in Bewegungsrichtung T der Förderkette 11 hintereinander und zwischen den Ionisierungsstäben 16, 17 angeordnet. Der rotierende Antrieb der Druckluftdüsen 18 erfolgt wahlweise über einen (nicht dargestellten) Antrieb oder mittels der einströmenden Druckluft in Verbindung mit der Anordnung und Ausrichtung der Druckluftdüsen 18 selbst, und zwar in der Art eines Druckluftmotors.

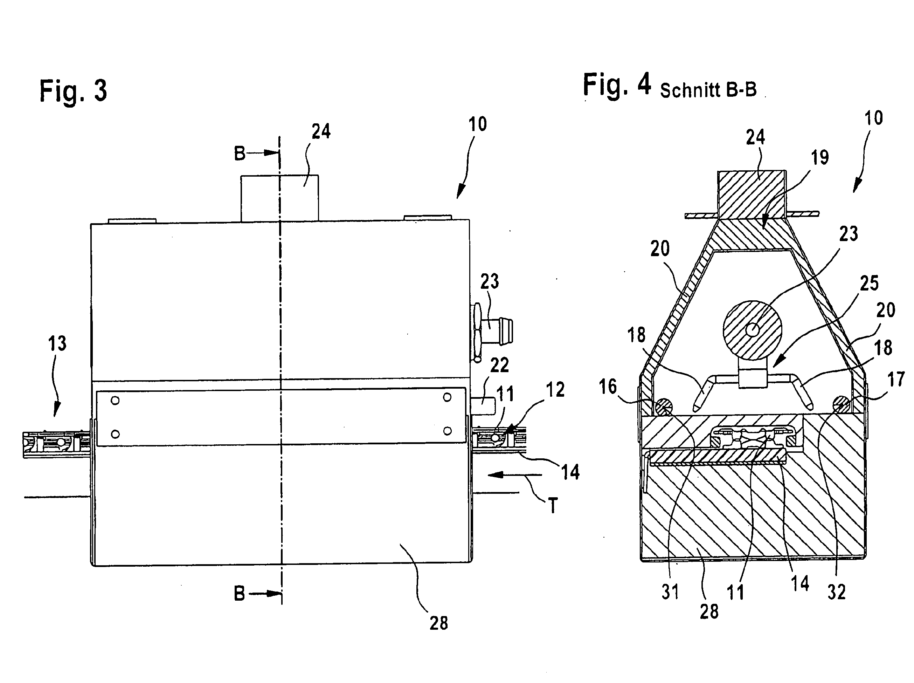

Die Saugeinrichtung 19 umfasst mindestens einen, vorzugsweise jedoch mehrere Kanäle 20, die die Druckluftdüsen 18 und die Ionisierungsstäbe 16, 17 ring- bzw. haubenartig umgeben (siehe insbesondere Figur 4). Mit anderen Worten umgeben die Kanäle 20 die Einheiten 25 und die Ionisierungsstäbe 16, 17 seitlich und oben, so dass eine Abschirmung zur Umgebung gewährleistet ist. Nach unten, in Richtung des zu reinigenden Förderelementes 12 bzw. der Förderkette 11 sind die Kanäle 20, die Ionisierungsstäbe 16, 17 sowie die Einheiten 25 frei bzw. offen liegend.

Die Ionisierungsstäbe 16, 17, die Druckluftdüsen 18 und die Saugeinrichtung 19 sind an eine gemeinsame Einheit 21 angeschlossen. Die Ionisierungsstäbe 16, 17 sind über Leitungen 22 an einen Ionisierspannungsversorger der Einheit 21 angeschlossen. Die Druckluftdüsen 18 stehen über Leitungen 23 mit einem Druckluftversorger der Einheit 21 in Verbindung. Die Saugeinrichtung 19 bzw. deren Kanäle 20 sind über Leitungen 24 mit einem Saugluftversorger der Einheit 21 verbunden.

Zur Bildung einer Reinigungskammer 27 ist der Vorrichtung 10 ein Gehäuse 28 zugeordnet. Das Gehäuse 28 schließt sich unmittelbar an die Kanäle 20 bzw. an die sie bildenden Wände an, so dass die nach außen mindestens teilweise abgeschottete bzw. abgekapselte Reinigungskammer 27 entsteht. Das Gehäuse 28 weist eine Eingangsöffnung 29 und eine Ausgangsöffnung 30 für die Förderkcttc 11 auf. Die Förderkette 11 ist durch die Reinigungskammer 27 hindurch bewegbar. In der gezeigten Ausführungsform ist die eigentliche Vorrichtung 10 oberhalb des Leertrums 13 angeordnet. Das Gehäuse 28, durch das der Leertrum 13 zu Reinigungszwecken geführt ist, ist im Wesentlichen unterhalb des Leertrums 13 angeordnet, so dass herab fallende Partikel aufgefangen werden können. Eine Positionierung der Vorrichtung 10 unterhalb und/oder seitlich des Leertrums 13 ist ebenfalls möglich. Bei allen Ausführungsformen umschließt das Gehäuse 28 unabhängig von der Positionierung sowohl die Unterseite als auch die Oberseite des Förderelementes 12 bzw. des Leertrums13 der Förderkette 11.

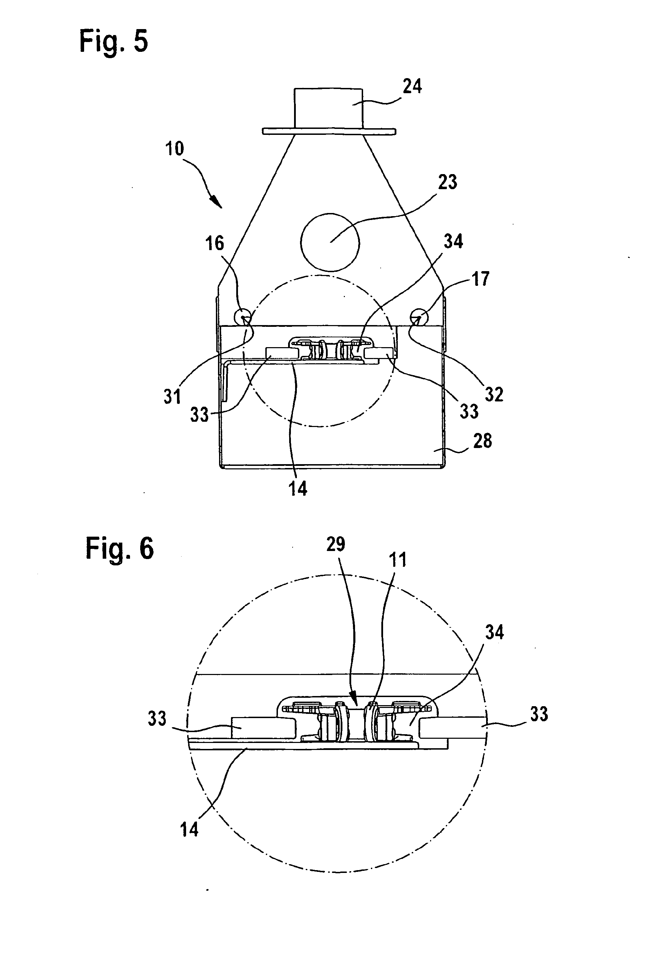

Im Bereich der Eingangsöffnung 29 und der Ausgangsöffnung 30 sind Dichtmittel 33 vorgesehen. Die Dichtmittel 33 schirmen die Reinigungskammer 27 nach außen zur Umgebung hin ab. Als Dichtmittel 33 können Dichtlippen, Bürstendichtungen oder andere übliche Dichtungen dienen. Die Dichtmittel 33 greifen seitlich in horizontal verlaufende Nuten 34 der Förderkette 11 ein (siehe insbesondere Figur 6). Bevorzugt sind jedoch Dichtmittel 33, deren Konturen an die Konturen der Förderkette 11 angepasst sind, so dass eine nahezu vollständige Abdichtung der Reinigungskammer 27 gegenüber der Umgebung gewährleistet ist. In montiertem Zustand, also bei Einbau der Vorrichtung 10 mit dem Gehäuse 28 ist dann für die Reinigungskammer 27 ein geschlossenes System geschaffen. Anders ausgedrückt ist für die Zuluft (als Druckluft durch die Druckluftdüsen 18) und die Abluft ein geschlossener Kreislauf gebildet.

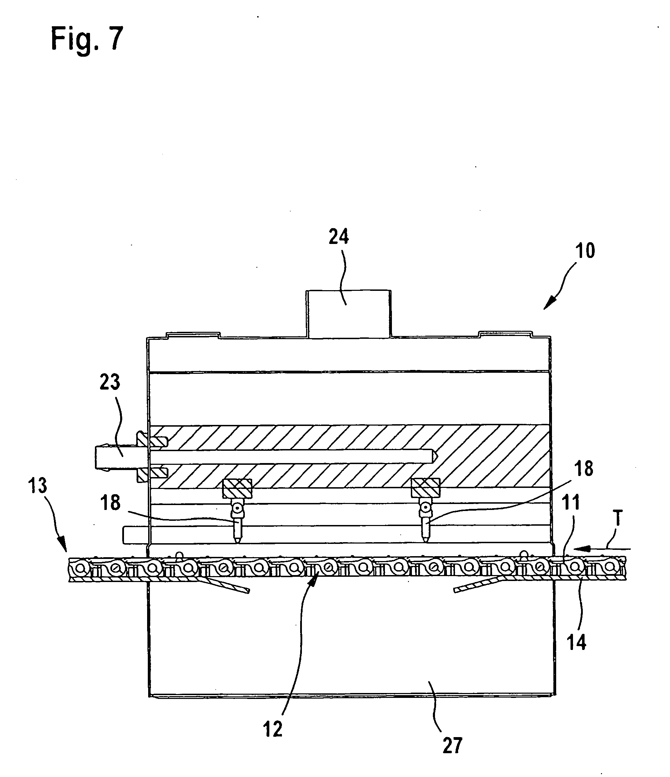

In einer bevorzugten Weiterbildung (gemäß Figur 7) ist das Führungselement 14 im Bereich der Reinigungskammer 27 mindestens teilweise unterbrochen. Mit anderen Worten hängt die Förderkette 11 in der gezeigten Ausführungsform in diesem Bereich frei. Die Unterbrechung kann aber auch durch Lochbleche, beabstandete Führungsschienen oder dergleichen realisiert sein.

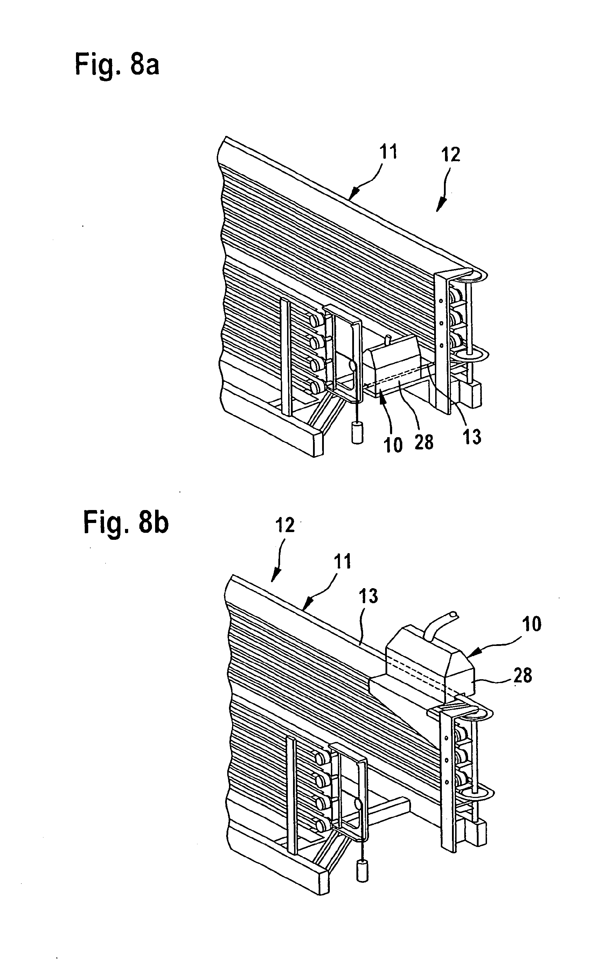

Aus der Figur 8 können unterschiedliche Positionen der Vorrichtung 10 innerhalb einer Anordnung entnommen werden. Die Vorrichtung 10 ist in der Figur 8a zwischen zwei Führungsstrecken einer Speichereinrichtung (wie sie in der eingangs erwähnten EP 1 445 218 A1 beschrieben ist), in denen der Leertrum 13 geführt wird, angeordnet, wobei die Vorrichtung 10 oberhalb des Leertrums 13 liegt und das Gehäuse 28 den Leertrum 13 mindestens partiell von allen Seiten umgibt bzw. einschließt. In der Anordnung gemäß Figur 8b ist die Vorrichtung 10 oberhalb einer Führungsstrecke der Speichereinrichtung angeordnet. Die Förderkette 11 selbst ist entsprechend der Darstellung gemäß Figur 8a innerhalb des Gehäuses 28 angeordnet bzw. durch dieses geführt.

In einer nicht explizit dargestellten Ausführungsform kann die Vorrichtung 10 auch an eine Steuerung angeschlossen sein. Mittels der Steuerung lässt sich ein automatisiertes Reinigen, beispielsweise in Abhängigkeit des Grades der Verunreinigung, der durch Erfahrungswerte und/oder Messmittel definierbar ist, durchführen. Die Steuerung kann zur Steuerung und/oder Regelung wesentlicher die Reinigung beeinflussender Parameter, wie z.B. Druckluftleistung, Absaugleistung, Rotationsgeschwindigkeit der Druckluftdüsen 18 eingesetzt werden. Die Vorrichtung 10 kann auch mit ihren Kanälen 20 bzw. Leitungen 24 an eine (zentrale) Entstaubungsanlage angeschlossen sein.

Im Folgenden wird das Verfahrensprinzip anhand der Figur 2 näher erläutert:
Der Leertrum 13 ist in die Vorrichtung 10, genauer in das Gehäuse 28 eingefädelt und wird in Transportrichtung T bewegt. Wahlweise kontinuierlich oder zyklisch wird die Vorrichtung 10 in Betrieb gesetzt. Die Ionisierungsstäbe 16, 17 werden über die Leitungen 22 mit einer Spannung versehen, so dass elektrostatische Ladungen auf der Oberfläche der Förderkette 11 beseitigt werden. Die rotierenden Druckluftdüsen 18 erzeugen über die Leitungen 23 eine turbulente Luftströmung, die kontinuierlich oder gepulst aufgebracht werden kann. Dadurch werden die Staubpartikel und andere Verschmutzungen erfasst, aufgewirbelt und abgetragen. Durch das mindestens teilweise offene Führungselement 14 im Bereich der Reinigungskammer 27 gelangt die Druckluft auch unterhalb des Leertrums 13, so dass die Förderkette 11, u.a. durch Reflexion der Druckluft an der Gehäusewand, auch von unten und von der Seite gereinigt wird. Durch die Saugeinrichtung 19 wird die verschmutze Abluft durch die Kanäle 20 über die Leitung 24 abgesaugt und optional einem Staubabscheider zugeführt. Sowohl die Druckluft als auch die Abluft zirkulieren dabei in einem geschlossenen Kreislauf, da die Dichtmittel 33 ein Eintreten von Luft in die Reinigungskammer 27 und Austreten von Luft aus der Reinigungskammer 27 im Wesentlichen verhindern.

Anstelle der Förderkette 11 können auch Bänder oder andere bekannte Förderelemente 12 mittels der Vorrichtung 10 gereinigt werden.

## Patentansprüche

1. Vorrichtung zum kontaktlosen Reinigen eines Förderelementes (12), das zur Aufnahme stabförmiger Artikel der Tabak verarbeitenden Industrie ausgebildet ist, umfassend mindestens ein Ionisierungselement (15) zur Beseitigung elektrostatischer Ladungen auf den zu reinigen den Oberflächen des Förderelementes (12), mindestens eine rotierende Druckluftdüse (18) zum Lösen und Abtragen von auf Oberflächen des Förderelementes (12) befindlichen Verschmutzungen sowie eine Saugeinrichtung (19) zum Absaugen der verschmutzten Abluft, **dadurch gekennzeichnet, dass** der Vorrichtung (10) ein Gehäuse (28) zur Bildung einer gegenüber der Umgebung mindestens teilweise abgeschirmten Reinigungskammer (27) zugeordnet ist, wobei die Reinigungskammer (27) eine Eingangsöffnung (29) und eine Ausgangsöffnung (30) für das zu reinigende Förderelement (12) aufweist, derart, dass Oberseite und Unterseite des Förderelementes (12) umschlossen sind, dass das Ionisierungselement (15) mindestens zwei Ionisierungsstäbe (16, 17) aufweist, wobei die Ionisierungsstäbe (16, 17) mit ihrer Längserstreckung parallel zum Förderelement (12) in dessen Bewegungsrichtung T ausgerichtet sind, und dass die Vorrichtung (10) mindestens zwei Einheiten (25) mit jeweils zwei Druckluftdüsen (18) aufweist, die rotierend ausgebildet sind, wobei die beiden Einheiten (25) mit den jeweils zwei Druckluftdüsen (18) in Bewegungsrichtung T des Förderelementes (12) hintereinander und zwischen den Ionisierungsstäben (16, 17) angeordnet sind.

2. Vorrichtung nach Anspruch 1, **dadurch gekennzeichnet, dass** im Bereich der Eingangsöffnung (29) und der Ausgangsöffnung (30) jeweils Dichtmittel (33) angeordnet sind.

3. Vorrichtung nach Anspruch 2, **dadurch gekennzeichnet, dass** die Dichtmittel (33) zur vollständigen Abdichtung der Reinigungskammer (27) an die Kontur des durch die Reinigungskammer (27) hindurch bewegbaren Förderelementes (12) angepasst sind.

4. Vorrichtung nach einem der Ansprüche 1 bis 3, **dadurch gekennzeichnet, dass** die Ionisierstäbe (16, 17) in Längsrichtung jeweils mit einer radial ausgerichteten Ionisierungsspitze (31, 32) versehen sind, wobei die Spitzen (31, 32) auf das Förderelement (12) gerichtet sind.

5. Vorrichtung nach einem der Ansprüche 1 bis 4, **dadurch gekennzeichnet, dass** der Abstand zwischen den Ionisierungsstäben (16, 17) bzw. deren Spitzen (31, 32) einerseits und dem Förderelement (12) andererseits variabel ist, vorzugsweise jedoch zwischen 20mm und 500mm beträgt.

6. Vorrichtung nach einem der Ansprüche 1 bis 5, **dadurch gekennzeichnet, dass** sie zyklisch betreibbar ist.

7. Vorrichtung nach einem der Ansprüche 1 bis 6, **dadurch gekennzeichnet, dass** sie an eine Steuerung zur automatisierten Steuerung und/oder Regelung der die Reinigung beeinflussenden Parameter, wie z.B. Druckluftleistung, Absaugleistung, Rotationsgeschwindigkeit der Druckluftdüse (18), Reinigungsintervall oder dergleichen in Abhängigkeit des Verschmutzungsgrades angeschlossen ist.

8. Vorrichtung nach einem der Ansprüche 1 bis 7, **dadurch gekennzeichnet, dass** sie an eine zentrale Entstaubungsanlage angeschlossen ist.

9. Anordnung zum Transportieren und/oder Speichern stabförmiger Artikel der Tabak verarbeitenden Industrie, umfassend ein endlos umlaufendes Förderelement (12), das einen mit Artikeln versehenen Volltrum und einen Leertrum (13) ohne Artikel aufweist, ein Führungselement (14), das unterhalb des Förderelementes (12) zum Führen und/oder Stützen desselben angeordnet ist, sowie eine Vorrichtung (10) zum Reinigen des Förderelementes (12), wobei die Vorrichtung (10) zum Reinigen im Bereich des Leertrums (13) angeordnet ist, **dadurch gekennzeichnet, dass** die Vorrichtung (10) zum Reinigen des Förderelementes (12) nach einem der Ansprüche 1 bis 8 ausgebildet ist.

10. Anordnung nach Anspruch 9, **dadurch gekennzeichnet, dass** sie für die Zuluft (Druckluft) und die Abluft einen geschlossenen Kreislauf aufweist.

11. Anordnung nach Anspruch 9 oder 10, **dadurch gekennzeichnet, dass** das Förderelement (12) eine aus Kunststoff hergestellte Förderkette (11) ist.

12. Anordnung nach einem der Ansprüche 9 bis 11, **dadurch gekennzeichnet, dass** das Führungselement (14) mindestens auf der dem Förderelement (12) bzw. der Förderkette (11) zugewandten Seite aus Kunststoff besteht

13. Anordnung nach einem der Ansprüche 9 bis 12, **dadurch gekennzeichnet, dass** das Führungselement (14) im Bereich der Reinigungskammer (27) mindestens teilweise unterbrochen ist.

14. Anordnung nach einem der Ansprüche 9 bis 13, **dadurch gekennzeichnet, dass** die Vorrichtung (10) zum Reinigen oberhalb des Leertrums (13) angeordnet ist.

15. Anordnung nach einem der Ansprüche 9 bis 14, **dadurch gekennzeichnet, dass** sie einen Staubabscheider umfasst.

## Claims

1. Apparatus for the contactless cleaning of a conveying element (12) which is designed to receive rod-shaped articles in the tobacco-processing industry, including at least one ionising element (15) for removing electrostatic charges on the surfaces of the conveying element (12) to be cleaned, at least one rotating compressed-air nozzle (18) for loosening and removing contaminants located on surfaces of the conveying element (12), and a suction device (19) for extracting the contaminated outgoing air, **characterized in that** associated with the apparatus (10) is a housing (28) for forming a cleaning chamber (27) at least partially shielded from the environment, whereby the cleaning chamber (27) has an inlet opening (29) and an outlet opening (30) for the conveying element (12) to be cleaned, such that upper side and lower side of the conveying element (12) are surrounded, that the ionising element (15) has at least two ionising rods (16, 17), whereby the ionising rods (16, 17) are oriented with their longitudinal extent parallel to the conveying element (12) in the direction of travel T thereof, and that the apparatus (10) has at least two units (25) with two compressed-air nozzles (18) each, which are of rotating design, wherein the two units (25) with the two compressed-air nozzles (18) each are arranged between the ionising rods (16, 17) and one behind the other in the direction of travel T of the conveyor chain (11).

2. Apparatus according to claim 1, **characterized in that** in the region of the inlet opening (29) and the outlet opening (30) are arranged in each case sealing means (33).

3. Apparatus according to claim 2, **characterized in that**, for complete sealing of the cleaning chamber (27), the sealing means (33) are adapted to the contour of the conveying element (12) which is movable through the cleaning chamber (27).

4. Apparatus according to any one of claims 1 to 3, **characterized in that** the ionising rods (16, 17) are each provided in the longitudinal direction with a radially oriented ionising tip (31, 32), whereby the tips (31, 32) are directed towards the conveying element (12).

5. Apparatus according to any one of claims 1 to 4, **characterized in that** the distance between the ionising rods (16, 17) or their tips (31, 32) on the one hand and the conveying element (12) on the other hand is variable, but preferably between 20 mm and 500 mm.

6. Apparatus according to any one of claims 1 to 5, **characterized in that** it can be operated cyclically.

7. Apparatus according to any one of claims 1 to 6, **characterized in that** it is connected to a control system for automated control and/or regulation of the parameters which influence cleaning, e.g. compressed air power, vacuum power, speed of rotation of the compressed-air nozzle (18), cleaning interval or the like as a function of the degree of contamination.

8. Apparatus according to any one of claims 1 to 7, **characterized in that** it is connected to a central dust extraction system.

9. Arrangement for transporting and/or storing rod-shaped articles in the tobacco-processing industry, including an endlessly rotating conveying element (12) which has a full strand provided with articles and an empty strand (13) without articles, a guide element (14) which is arranged below the conveying element (12) for guiding and/or supporting it, and an apparatus (10) for cleaning the conveying element (12), the apparatus (10) for cleaning being arranged in the region of the empty strand (13), **characterized in that** the apparatus (10) for cleaning the conveying element (12) is designed according to one any of claims 1 to 9.

10. Arrangement according to claim 9, **characterized in that** it has a closed circuit for the incoming air (compressed air) and the outgoing air.

11. Arrangement according to claim 9 or 10, **characterized in that** the conveying element (12) is a conveyor chain (11) made of plastic.

12. Arrangement according to any one of claims 9 to 11, **characterized in that** the guide element (14) at least on the side facing towards the conveying element (12) or the conveyor chain (11) is made of plastic.

13. Apparatus according to any one of claims 9 to 12, **characterized in that** the guide element (14) is at least partially interrupted in the region of the cleaning chamber (27).

14. Apparatus according to any one of claims 9 to 13, **characterized in that** the apparatus (10) for cleaning is arranged above the empty strand (13).

15. Arrangement according to any one of claims 9 to 14, **characterized in that** it includes a dust separator.

## Revendications

1. Dispositif pour le nettoyage sans contact d'un élément transporteur (12), qui est conçu pour recevoir des articles en forme de bâtonnet de l'industrie de transformation du tabac, comprenant au moins un élément d'ionisation (15) destiné à éliminer les charges électrostatiques présentes sur les surfaces à nettoyer de l'élément transporteur (12), au moins une buse à air comprimé rotative (18) destinée à détacher et à enlever les salissures qui se trouvent sur les surfaces de l'élément transporteur (12), ainsi qu'un dispositif aspirateur (19) destiné à aspirer l'air sortant pollué, **caractérisé en ce qu'**au dispositif (10) est coordonné un boîtier (28) destiné à former une chambre de nettoyage (27) au moins partiellement isolée par rapport à l'environnement, la chambre de nettoyage (27) présentant une ouverture d'entrée (29) et une ouverture de sortie (30) pour l'élément transporteur (12) à nettoyer, de telle sorte que la face supérieure et la face inférieure de l'élément transporteur (12) soient enfermées, **en ce que** l'élément d'ionisation (15) présente au moins deux barres d'ionisation (16, 17), les barres d'ionisation (16, 17) étant orientées avec leur extension longitudinale parallèle à l'élément transporteur (12) dans la direction de mouvement T de ce dernier, et **en ce que** le dispositif (10) présente au moins deux unités (25) comprenant chacune deux buses à air comprimé (18) qui sont réalisées rotatives, les deux unités (25) avec leurs deux buses à air comprimé (18) respectives étant disposées l'une à la suite de l'autre dans la direction du mouvement T de l'élément transporteur (12) et entre les barres d'ionisation (16, 17).

2. Dispositif selon la revendication 1, **caractérisé en ce que** des moyens d'étanchéité (33) sont disposés dans chacune des régions de l'ouverture d'entrée (29) et de l'ouverture de sortie (30).

3. Dispositif selon la revendication 2, **caractérisé en ce que**, pour assurer l'étanchéité parfaite de la chambre de nettoyage (27), les moyens d'étanchéité (33) sont adaptés au profil de l'élément transporteur (12) qui peut être entraîné à travers la chambre de nettoyage (27).

4. Dispositif selon l'une des revendications 1 à 3, **caractérisé en ce que** les barres d'ionisation (16, 17) sont munies chacune dans la direction longitudinale d'une pointe d'ionisation (31, 32) orientée radialement, les pointes (31, 32) étant dirigées vers l'élément transporteur (12).

5. Dispositif selon l'une des revendications 1 à 4, **caractérisé en ce que** la distance entre les barres d'ionisation (16, 17), ou leurs pointes (31, 32), d'une part, et l'élément transporteur (12), d'autre part, est variable, mais est de préférence comprise entre 20 mm et 500 mm.

6. Dispositif selon l'une des revendications 1 à 5, **caractérisé en ce qu'**il peut être actionné de façon cyclique.

7. Dispositif selon l'une des revendications 1 à 6, **caractérisé en ce qu'**il est raccordé à une commande .destinée à assurer la commande et/ou la régulation automatique(s) des paramètres agissant sur le nettoyage, comme par exemple la puissance de l'air comprimé, la puissance d'aspiration, la vitesse de rotation de la buse à air comprimé (18), l'intervalle de nettoyage ou équivalent, en fonction du degré de salissure.

8. Dispositif selon l'une des revendications 1 à 7, **caractérisé en ce qu'**il est raccordé à une installation de dépoussiérage centrale.

9. Installation destinée à transporter et/ou à accumuler des articles en forme de bâtonnet de l'industrie de transformation du tabac, comprenant un élément transporteur (12) circulant en boucle sans fin, qui présente un brin plein portant des articles et un brin vide (13) sans article, un élément de guidage (14) qui est disposé au-dessous de l'élément transporteur (12) pour guider et/ou soutenir ce dernier, ainsi qu'un dispositif (10) destiné à nettoyer l'élément transporteur (12), le dispositif (10) destiné à nettoyer étant disposé dans la région du brin vide (13), **caractérisée en ce que** le dispositif (10) destiné à nettoyer l'élément transporteur (12) est réalisé selon l'une des revendications 1 à 8.

10. Installation selon la revendication 9, **caractérisée en ce qu'**elle présente un circuit fermé pour l'air d'amenée (air comprimé) et pour l'air de sortie.

11. Installation selon la revendication 9 ou 10, **caractérisée en ce que** l'élément transporteur (12) est une chaîne transporteuse (11) fabriquée en matière plastique.

12. Installation selon l'une des revendications 9 à 11, **caractérisée en ce que** l'élément de guidage (14) est composé de matière plastique au
moins sur la face dirigée vers l'élément transporteur (12) ou vers la chaîne transporteuse (11).

13. Installation selon l'une des revendications 9 à 12, **caractérisée en ce que** l'élément de guidage (14) est interrompu au moins partiellement dans la région de la chambre de nettoyage (27).

14. Installation selon l'une des revendications 9 à 13, **caractérisée en ce que** le dispositif (10) de nettoyage est agencé au-dessus du brin vide (13).

15. Installation selon l'une des revendications 9 à 14, **caractérisée en ce qu'**elle comporte un dépoussiéreur.
